# EUROPEAN PATENT APPLICATION

(11) **EP 1 120 762 A1**
(43) Date of publication of application: **01.08.2001**
(21) Application number: 00908026.8
(22) Date of filing: 13.03.2000
(51) Int. Cl.: G07G 1/12, G07G 1/01, G06K 17/00, A47F 5/00

(54) **INFORMATION DISPLAY SYSTEM**

(30) Priority: 12.03.1999 JP 6621699
(71) Applicant: Toshiba Tec Kabushiki Kaisha, Tokyo 101-8442 (JP)
(72) Inventor: MATSUSHITA, Naohiro, Mishima-shi, Shizuoka 411-0023 (JP)
(74) Representative: Fuchs Mehler Weiss & Fritzsche
(86) International application number: JP0001496
(87) International publication number: WO0055822

(57) **Abstract**

An information display system includes a radio transmission device (3, 5) for transmitting article information of an article as a radio signal and an information display unit (2) detachably attached to a portion of an article display rack where the article is exhibited, for receiving article information transmitted from the radio transmission device (3, 5) as the radio signal and displaying the article information. Particularly, the information display unit further includes a monitoring section (55, 56) for monitoring the movement of the information display unit (2).

## Description

### Technical Field

This invention relates to an information display system for displaying article information of articles exhibited on the article display rack of a store, for example.

### Background Art

In a store for selling foodstuffs and the like, labels displaying price information items of respective articles are attached to the article display rack, but the selling prices of the articles are often changed according to a day or time zone. When the selling price is changed, it is always necessary to make the displayed price of the label on the display rack on which a corresponding article is exhibited coincident with article price information of a cash register where registration and settlement of an article purchased by a customer are made. However, in a system using labels, a change of the displayed price of the label and a change of the price of a corresponding article in the cash register must be separately made and it is troublesome.

Therefore, display units are provided on the respective article exhibition places of the article display rack, a radio relay device and loop antenna are provided for the article display rack, the price information of the article whose price is to be changed is wire-transmitted from a host computer to the radio relay device, the radio relay device attaches ID information thereto and radio-transmits the same from the loop antenna to the display unit, the display unit receives the same, and if it is the price information addressed thereto, it fetches the price information and changes the display.

Further, at the same time, the host computer wire-transmits the price information to respective cash registers installed in the settlement place and each of the cash registers changes the price of the corresponding article when the price information is received.

If the above information display system is used, a change of the displayed price by the display unit of the corresponding article on the article display rack and a change of price information of the corresponding article in the article file of the cash register 6 can be simultaneously made only by effecting the article price changing operation in the host computer so that the displayed price and the article price information in the article file can be always made coincident with each other and an effect that the price changing operation can be easily effected can be attained.

In the information display system, a scheme of simply mounting the display unit by a screw or the like is used when the display unit is detachably and slidably attached to a rail or the like fixed to the article display rack and the position thereof is adjusted.

Accordingly, since it can be easily slid or detached by removing the screw, there occurs a problem that it may be unjustly displaced or unjustly detached. However, even if it is unjustly displaced, no abnormality is determined on the system because a response signal is returned from the display unit when the host computer transmits price information to the display unit via the radio relay device in order to make the price change, and therefore, there occurs a problem that a wrong price is kept displayed for the article. Further, if it is unjustly detached, there occurs a problem that it is impossible to confirm this until price information is transmitted from the host computer to the corresponding display unit via the radio relay device in order to make the price change and the it is detected that a response signal is not returned from the corresponding display unit, and in a case where price information is not transmitted, a problem that confirmation cannot be made for a longer period of time will occur.

### Disclosure of Invention

An object of this invention is to provide an information display system and information display unit for solving the problems of the prior art technique as described above and making it possible to rapidly cope with positional abnormality of the display unit.

According to this invention, there is provided an information display system comprising a radio transmission device for transmitting article information of an article as a radio signal, information display unit detachably attached to a place where the article is exhibited, for receiving article information transmitted from the radio transmission device as the radio signal and displaying the article information, and a monitoring section for monitoring the movement of the information display unit.

Further, according to this invention, there is provided an information display unit which is detachably attached to a place where an article is exhibited, comprising a display section for displaying article information of the article, a receiving section for receiving article information transmitted from an external radio transmission device as a radio signal, and a control circuit for controlling the display section to display the article information received by the receiving section, wherein the control circuit includes a monitoring section for monitoring the movement of the information display unit.

In the information display system and information display unit, the monitoring section monitors the movement of the information display unit. Therefore, even if the information display unit is moved for fun, it is possible to take a step of rapidly returning the information display unit to the attachment place based on the monitoring result of the monitoring section.

### Brief Description of Drawings

FIG. 1 is a diagram showing the whole construction of an information display system according to a first embodiment of this invention;
FIG. 2 is a block diagram showing the circuit construction of a radio relay device shown in FIG. 1;
FIG. 3 is a block diagram showing the circuit construction of an information display unit shown in FIG. 1;
FIG. 4 is a diagram showing a radio signal transmitted between the radio relay device and the information display unit shown in FIG. 1;
FIG. 5 is a block diagram showing the circuit construction of a metal detecting section shown in FIG. 3;
FIG. 6 is a view showing the arrangement of a metal proximity sensor shown in FIG. 5;
FIG. 7 is a flowchart showing the operation of a CPU shown in FIG. 3;
FIG. 8 is a flowchart of a reception and response process shown in FIG. 7;
FIG. 9 is a block diagram showing the circuit construction of an information display system according to a second embodiment of this invention;
FIG. 10 is a diagram showing a radio signal transmitted between a radio relay device and an information display unit shown in FIG. 9;
FIG. 11 is a diagram showing the construction of an in-area signal incorporated into the radio signal shown in FIG. 9;
FIG. 12 is a flowchart showing the operation of a CPU shown in FIG. 9;
FIG. 13 is a block diagram showing the circuit construction of an information display system according to a third embodiment of this invention;
FIG. 14 is a flowchart showing the operation of a CPU shown in FIG. 13;
FIG. 15 is a block diagram showing the circuit construction of an information display system according to a fourth embodiment of this invention;
FIG. 16 is a view for illustrating the arrangement of a release switch shown in FIG. 15; and
FIG. 17 is a flowchart showing the operation of a CPU shown in FIG. 15.

### Best Mode for Carrying Out the Invention

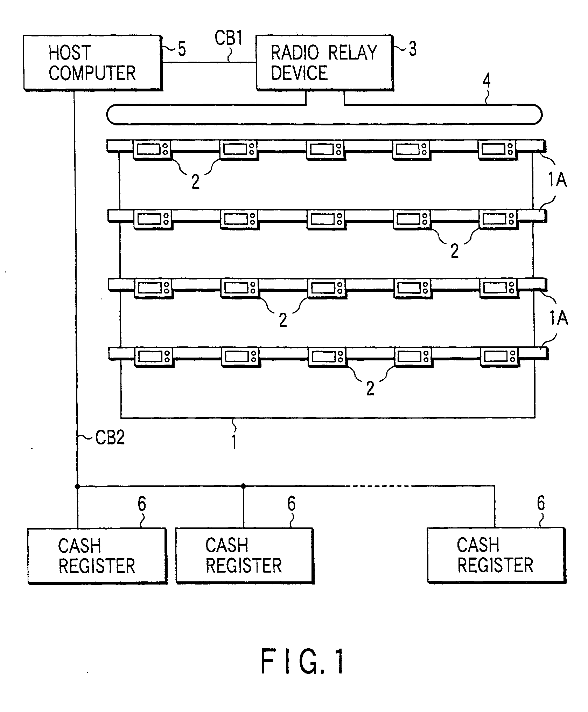

There will now be described an information display system according to a first embodiment of this invention with reference to the accompanying drawings. FIG. 1 shows the whole construction of the information display system. The information display system is used for displaying article information items of various articles exhibited on a steal-made article display rack 1, for example, in a store. The article information mainly includes a selling price and can include an article name or the like in addition to the selling price. As shown in FIG. 1, the information display system includes a plurality of information display units 2 attached to front rails of the article display rack 1 according to types of articles, a radio relay device 3 for making data communication by radio with respect to the information display units 2, and a host computer 5 for accessing the information display units 2 by use of the radio relay device 3. For example, the host computer 5 is installed on a backyard in the store and connected to the radio relay device 3 via a communication cable CB1 so as to supply article information of specified articles to the radio relay device 3. The radio relay device 3 has a loop antenna 4 disposed on the ceiling of the store, for example, at a position close to the article display rack 1. The radio relay device 3 adds ID information of the information display unit 2 provided for a specified article to article information supplied from the host computer 5 and transmits them by radio from the loop antenna 4 to all of the information display units 2. Each of the information display units 2 receives the ID information and article information, and analyzes the ID information. If it is identified that the ID information belongs to itself, the information display unit 2 displays the selling price based on the article information obtained together with the ID information.

Further, the host computer 5 is connected to the cash registers 6 installed in the settlement place via a communication cable CB2 and also supplies the article information of the specified article to the cash registers 6 when it supplies the article information of the specified article to the radio relay device 3. Each of the cash registers 6 modifies the article file based on the article information from the host computer 5 so that the selling price of the specified article will become coincident with the selling price displayed on the information display unit 2 for the article.

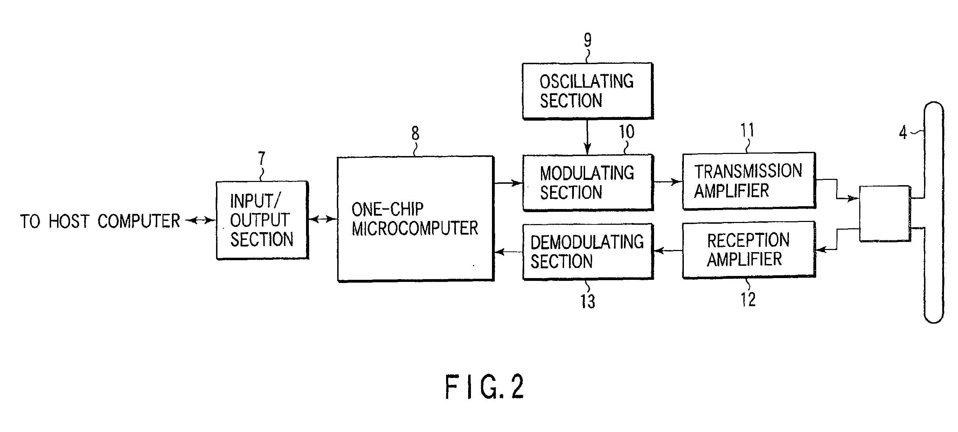

As shown in FIG. 2, the radio relay device 3 includes an input and output section 7, one-chip microcomputer 8, oscillating section 9, modulating section 10, transmission amplifier 11, loop antenna 4, reception amplifier 12 and demodulating section 13. The input and output section 7 serves as an interface with respect to the host computer 5. The microcomputer 8 generates article information of the specified article supplied from the host computer 31 via the input and output section 7 and an information signal constructed by a sync. signal and ID information of the information display unit 2 provided for the specified article. The oscillating section 9 generates a carrier wave of a long wave band for transmission. The modulating section 10 generates a radio signal obtained by modulating the carrier wave from the oscillating section 9 according to the information signal supplied from the microcomputer 8. The transmission amplifier 11 amplifies the radio signal generated from the modulating section 10 and supplies the same to the loop antenna 4. The loop antenna 4 propagates the radio signal into a space to reach the information display units 2 and receives a radio signal propagated in the space and arrived from each information display unit 2. The reception amplifier 12 amplifies the radio signal from the loop antenna 4. The demodulating section 13 synchronously detects the radio signal amplified by the reception amplifier 12 to demodulate response data and ID information and the like generated from the information display unit 2 side. The microcomputer 8 supplies the ID information and response data demodulated by the demodulating section 13 to the host computer 5 via the input and output section 7. In this embodiment, the host computer 5 and radio relay device 3 construct a radio transmission device for transmitting article information of an article as a radio signal.

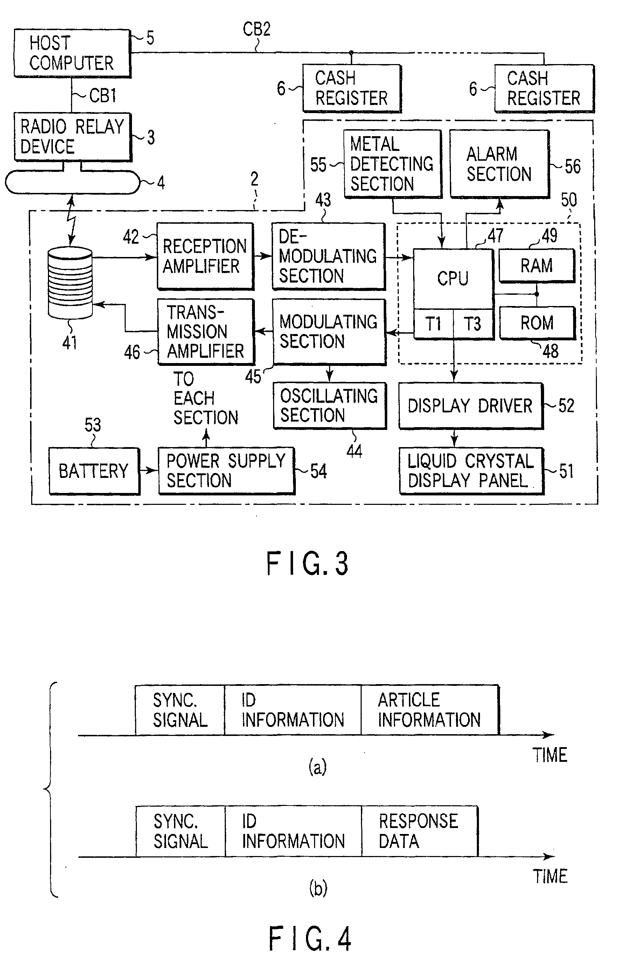

As shown in FIG. 3, each of the information display units 2 includes a coil antenna 41, reception amplifier 42, reception amplifier 42, demodulating section 43, oscillating section 44, modulating section 45, transmission amplifier 46, liquid crystal display panel 51, display driver 52, metal detecting section 55 and alarm section 56, and is detachably attached by use of a fixing member such as a screw or the like to a metal portion of a front rail 1A adjacent to the exhibition zone of the corresponding article and serving as an attachment place. The coil antenna 41 receives a radio signal propagated in the space and transmitted from the radio relay device 8. The reception amplifier 42 amplifies the radio signal received by the coil antenna 41. The demodulating section 43 synchronously detects the radio signal amplified by the reception amplifier 42 to demodulate ID information and article information. A one-chip microcomputer 50 includes a CPU (central processing unit) 47 for performing various data processings and control operations, a ROM (read only memory) 48 for storing a control program of the CPU 47 and fixed data such as items of ID information or the like inherent to the information display units 2, and a RAM (random access memory) 49 for temporarily storing data input to and output from the CPU 47, and processes ID information and article information demodulated by the demodulating section 43. Specifically, the CPU 47 collates ID information input to the serial input port from the demodulating section 42 with ID information stored in the ROM 48, and supplies article information obtained together with the ID information from the serial output port to the display driver 50 when coincidence occurs. The display driver 52 drives the liquid crystal display panel 51 based on the article information from the CPU 47. As a result, the liquid crystal display panel 51 displays the selling price of a corresponding article. Further, the CPU 47 generates a response signal constructed by a sync. signal, its own ID information and response data to be transmitted to the radio relay device 3. The oscillating section 44 generates a carrier wave of a long wave band for transmission. The modulating section 45 generates a radio signal obtained by modulating the carrier wave from the oscillating section 17 according to the response signal supplied from the one-chip microcomputer 50. The transmission amplifier 46 amplifies the radio signal generated from the modulating section 45 and supplies the same to the coil antenna 41. The coil antenna 41 propagates the radio signal into the space so as to reach the radio relay device 8.

The information display unit 2 further includes the metal detecting section 55 and alarm section 56, which are associated with the microcomputer 50 to serve as a monitoring section for monitoring the movement of the information display unit 2. The metal detecting section 55 is connected to the input port of the CPU 47 and the alarm section 56 is connected to the output port of the CPU 47. The metal detecting section 55 detects the presence or absence of the metal portion of the front rail 1A and informs the CPU 47 of the result of detection. The CPU 47 drives the alarm section 56 when it is confirmed based on the detection result that the information display unit 2 is separated from the attachment place on the article display rack 1. As a result, the alarm section 56 informs the movement of the information display unit 2. In this connection, the information display unit 2 includes a lithium battery 53 for generating a power source voltage of the information display unit 2, and a power supply section 54 for stabilizing the power source voltage from the lithium battery 53 and supplying the same to all of the components of the information display unit 2. The average service life of the lithium battery 53 is 5, 6 years with respect to the total power consumption of the information display unit 2.

In the information display system, as shown in (a) of FIG. 4, the radio relay device 3 transmits an information signal constructed by a sync. signal used for demodulation on the receiver side, ID information for identifying a specified information display unit among a plurality of information display units 2 and article information to be displayed to the information display unit 2 in the form of a radio signal, and as shown in (b) of FIG. 4, the information display unit 2 transmits a response signal constructed by a sync. signal used for demodulation on the receiver side, ID information of the information display unit 2 selected for response, and response data indicating an affirmative response or negative response to the radio relay device 3 in the form of a radio signal. In this case, the affirmative response indicates a reception acknowledgement of the article information and the negative response indicates a reception error of the article information.

The loop antenna 4 of the radio relay device 3 and the coil antenna 41 of the information display unit 2 are connected together by electromagnetic induction of a long wave band. In this case, a modulation system such as frequency modulation, phase modulation, amplitude modulation or the like is used for the above-described data communication. The radio relay device 3 transmits a radio signal to the information display units 2 which are arranged in a reception range set to approx. 10 to 14m from the loop antenna 4 by taking the reliability of data communication into consideration. The information display unit 2 cannot receive the radio signal from the radio relay device 3 outside the reception range.

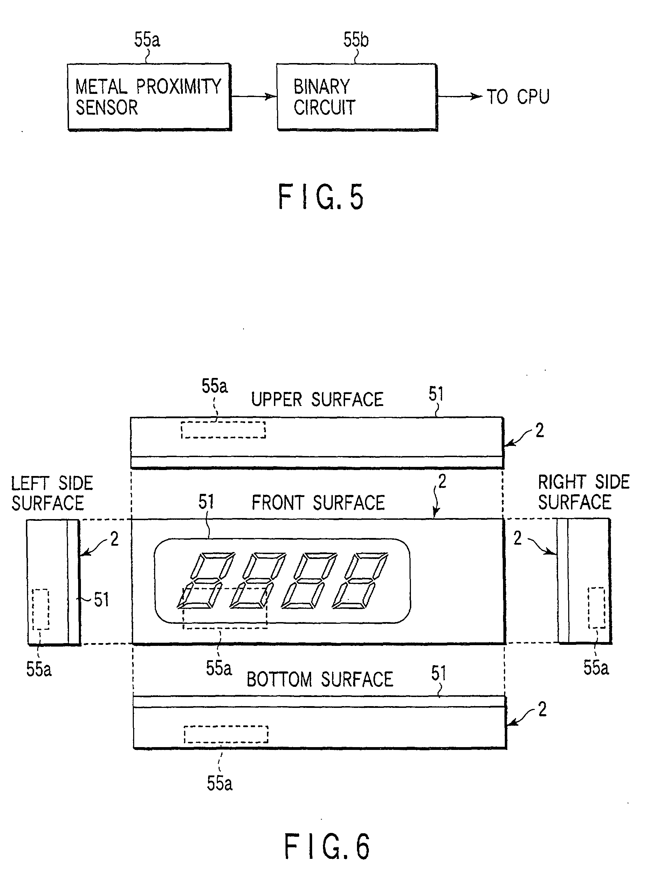

As shown in FIG. 5, the metal detecting section 55 is constructed by a metal proximity sensor 55a for detecting metal lying within several millimeters and a binary circuit 55b for converting an output signal of the metal proximity sensor 55a to a bistable voltage of high level or low level which can be input to the CPU 47. The metal proximity sensor 55a is accommodated in a dielectric case of the information display unit 32 such that it is positioned in a lower left rear of the liquid crystal display panel 51 shown in FIG. 6. The metal proximity sensor 55a detects a presence of the metal portion of the front rail 1A when the information display unit 2 is attached to the front rail 1A of the article display rack 1 and detects an absence of the metal portion of the front rail 1A when the information display unit 2 is detached from the front rail 1A of the article display rack 1. For example, the metal proximity sensor 55a is a non-contact type sensor for monitoring the electrostatic capacity which varies depending on the presence or absence of metal positioned close to the dielectric case. The CPU 47 drives the alarm section 56 when it is indicated by an output signal of the metal detecting section 55 that the information display unit 2 is in a separated state with respect to the metal portion defining the attachment place.

The operation of the information display system is explained below. For example, when the selling price of a specified article is updated, a person who is in charge of the store operates the keys of the host computer 31 to reflect the new selling price on article information of the specified article registered in the master file. As a result, the host computer 5 supplies the article information of the specified article to the electronic cash registers 6 via the communication cable CB2 and supplies the article information of the specified article to the radio relay device 3 via the communication cable CB1. The cash register 6 modifies the article file based on the article information of the specified article supplied from the host computer 5. On the other hand, the radio relay device 3 adds ID information of the information display unit 2 provided for the specified article to the article information, and transmits the same to all of the information display units 2 as a radio signal.

When the information display unit 2 receives the radio signal, ID information and article information are demodulated from the radio signal and processed by the CPU 47.

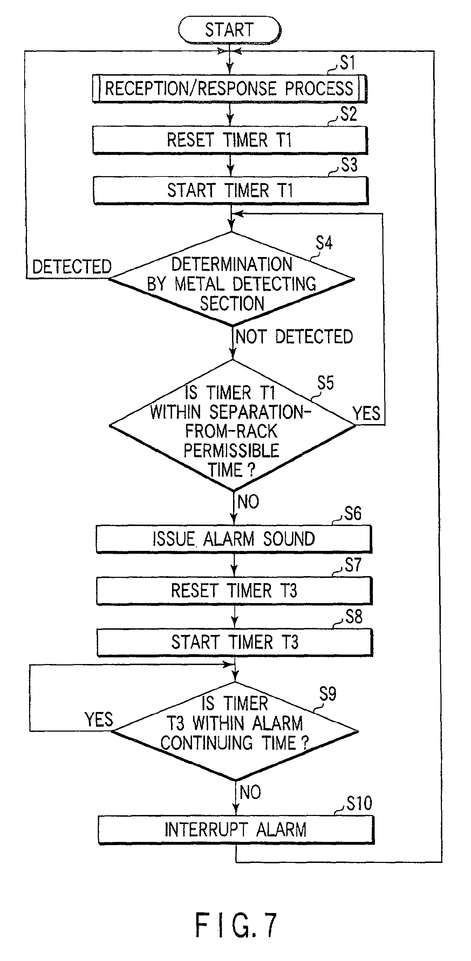

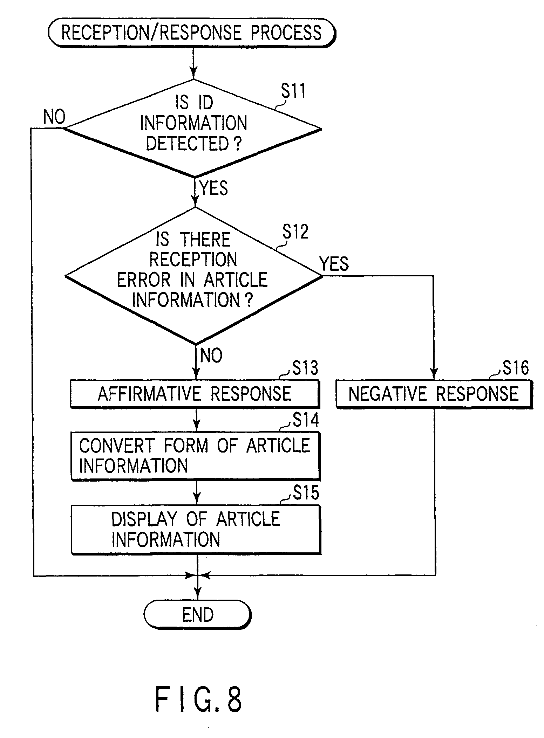

FIG. 7 shows the operation of the CPU 47. The operation begins upon supply of power. The CPU 47 performs the reception and response process in the initial step S1. The reception and response process is performed as shown in FIG. 8. In the reception and response process, the CPU 47 checks in step S11 whether the received ID information coincides with its own ID information stored in the ROM 48. If its own ID information is not detected, the reception and response process is terminated after step S11.

If its own ID information is detected, it is determined that the article information is transmitted to the information display unit 2 itself. In this case, the CPU 47 checks in step S12 whether a reception error occurs for article information obtained together with the ID information. If there occurs no reception error, the CPU 47 generates response data of affirmative response in step S13 and supplies the same to the modulating section 45 so as to radio-transmit the same to the radio relay device 3 together with the sync. signal and its own ID information. After this, the CPU 47 converts the article information into a display form in step S14 and supplies the same to the display driver 50 in step S15. As a result, the display driver 52 drives the liquid crystal display panel 51 based on the article information from the CPU 47 and updates the display contents of the liquid crystal display panel 51 to a new selling price. In this case, the reception and response process is terminated after step S15.

If the existence of the reception error is determined in step S12, the CPU 47 generates response data of negative response in step S16 and supplies the same to the modulating section 45 so as to radio-transmit the same to the radio relay device 3 together with the sync. signal and its own ID information. In this case, the reception and response process is terminated after step S16.

If the reception and response process is terminated as described above, the operation shown in FIG. 7 is continuously performed. That is, the CPU 47 initializes a timer T1 of software construction in step S2 and starts the timer T1 in step S3. After this, the timer T1 independently counts the passage of time in parallel to another software process until it is initialized again. After starting the timer T1, in step S4, the CPU 47 checks an output signal of the metal detecting section 55 to determine whether the information display unit 2 is set in the state that it is separated from the attachment place on the article display rack 1. Specifically, the separated state is determined based on an output signal obtained when the metal proximity sensor 55a cannot detect the metal portion of the front rail 1A of the article display rack 1. Since the information display unit 2 is set in an attached state if the metal is detected, step S1 is executed again.

If it is determined in step S4 that the information display unit 2 is set in the separated state, the CPU 47 checks the timer T1 to determine whether the passage of time is within a preset separation-from-rack permissible time in step S5. If the passage of time is within the separation-from-rack permissible time, step S4 is executed again.

If the passage of time exceeds the separation-from-rack permissible time, the CPU 47 drives the alarm section 56 in step S6, initializes a timer T3 in step S7 and starts the timer T3 in step S8. After this, the CPU 47 checks the timer T3 to determine whether the passage of time is within a preset alarm continuing time in step S9. If the passage of time is within the alarm continuing time, step S9 is executed again. If the passage of time exceeds the alarm continuing time, the CPU 47 interrupts the operation of the alarm section 56 in step S10 and executes step S1 again.

In the information display system, the reception and response process is terminated without displaying the article information when the CPU 47 cannot detect its own ID information in step S11 in the reception and response process shown in FIG. 8. Therefore, if the information display unit 2 is not separated from the attachment place, steps S1 to S4 shown in FIG. 7 are always repeatedly executed irrespective of the display state of the article information. Thus, the movement of the information display unit 2 is continuously monitored.

In the information display system of the first embodiment, if the information display unit 2 is slid or detached from the article display rack 1 for fun, and as a result, it is separated from the attachment place, the alarm section 56 issues an alarm sound after the elapse of the separation-from-rack permissible time to notify the surrounding of this. Therefore, it is possible to rapidly cope with the positional abnormality of the information processing unit 2 by detecting the information display unit 2 which issues an alarm sound and returning the same to the attachment place.

Further, even if the information display unit 2 is separated from the attachment place on the article display rack 1, an alarm sound is not issued if the separation time is within the preset separation-from-rack permissible time. As a result, even if a clerk temporarily detaches the information display unit 32 from the article display rack 1 for adjustment or displacement of the information display unit 2, inconvenience that the alarm is sounded will not occur. It is preferable to set 10 seconds or less as the separation-from-rack permissible time.

The metal detecting section 55 uses the metal proximity sensor for detecting that the information display unit 2 is separated from the attachment place, but it is not always limited to this construction. Therefore, it is possible to use a sensor for, for example, mechanically, optically, electrically or magnetically detecting that the information display unit 2 is separated from the attachment place.

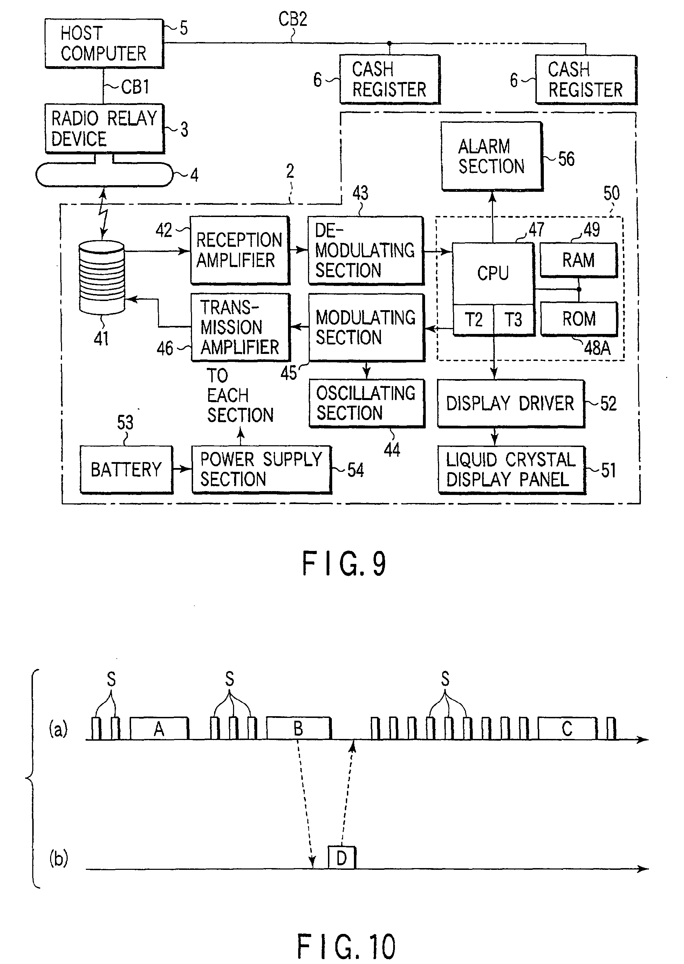

Next, an information display system according to a second embodiment of this invention is explained. FIG. 9 shows the circuit construction of the information display system. The information display system is constructed to monitor the movement of information display units 2 by using an in-area signal incorporated in a radio signal transmitted from a radio relay device 3. In the information system, a microcomputer 50 constructs a monitoring section for monitoring the movement of the information display units 2 together with an alarm section 56. Therefore, the metal detecting section 55 shown in FIG. 3 is omitted in the information display unit 2 and the ROM 48 is replaced by a ROM 48A for storing a control program of the CPU 47 which is modified according to utilization of the in-area signal. The information display system is constructed by substantially the same hardware as the information display system of the first embodiment except the above different point. Therefore, in FIG. 9, the explanation for like portions which are denoted by the same reference numerals as in the first embodiment is omitted and the different point with respect to the first embodiment is mainly explained.

In the information display system shown in FIG. 9, the radio relay device 3 transmits a radio signal shown in (a) of FIG. 10 to the information display units 2. In (a) of FIG. 10, A, B, C indicate an information signal constructed by a sync. signal, ID information and article information which are the same as in the first embodiment and S indicates an in-area signal inserted into the time slot between the data signals A, B, C at a regular interval. Further, the information display unit 2 transmits a radio signal shown in (b) of FIG. 10 to the radio relay device 3. In (b) of FIG. 10, D indicates a response signal constructed by a sync. signal, ID information and response data which are the same as in the first embodiment.

As shown in FIG. 9, the in-area signal is constructed by a sync. signal and attribute information. In this case, the attribute information is an identification code which can specify the radio relay device 3 even in a case where a plurality of radio relay devices 3 are used. A plurality of information display units 2 recognize that the information display units themselves are present in the reception range of the radio signal from the corresponding radio relay device 3 when they repeatedly receive the in-area S including the attribute information for specifying the radio relay devices 3 corresponding to the group of the information display units 2. Therefore, if it cannot receive the in-area S including the attribute information for specifying the corresponding radio relay device 3, it is recognized that the information display unit itself is separated from the reception range of the radio signal of the corresponding radio relay device 3.

When the information display unit 2 receives the radio signal from the radio relay device 3, ID information and article information are demodulated from the radio signal and processed by the CPU 47.

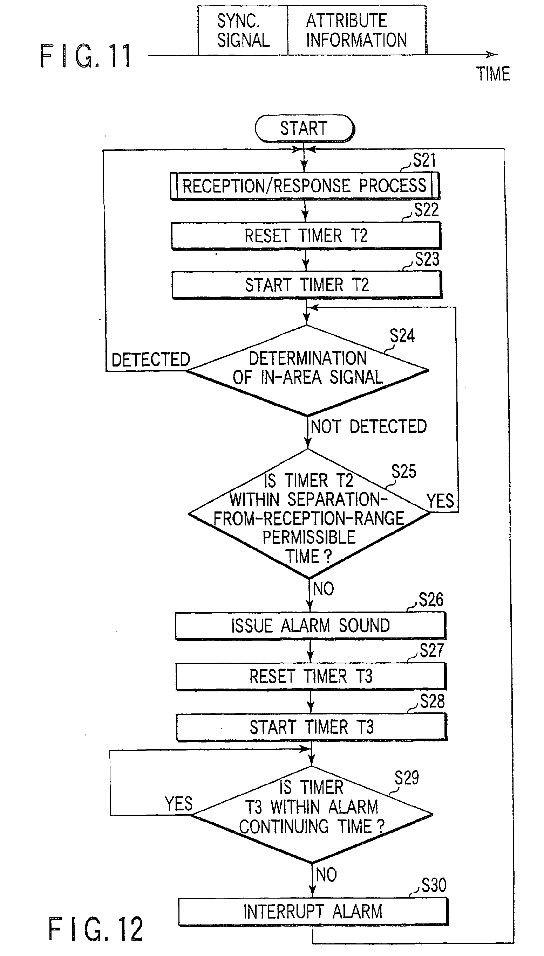

FIG. 12 shows the operation of the CPU 47. The operation begins upon supply of power. The CPU 47 performs the reception and response process which is the same as in FIG. 8 in initial step S21. If the reception and response process is terminated, the CPU 47 initializes a timer T2 of software construction in step S21 and starts the timer T2 in step S23. After this, the timer T2 independently counts the passage of time in parallel to another software process until it is initialized again. After starting the timer T2, in step S24, the CPU 47 checks the in-area signal S to determine whether the information display unit 2 is set in the state that it is separated from the reception range of the radio signal transmitted from the radio relay device 3. Specifically, the separated state is determined when the in-area signal S for specifying the radio relay device 3 corresponding to the information display unit 2 cannot be received. Since the information display unit 2 is set in the attached state if the in-area signal S is detected, step S21 is executed again.

If it is determined in step S24 that the in-area signal S cannot be detected and the information display unit 2 is set in the separated state with respect to the reception range of the radio signal transmitted from the radio relay device 3, the CPU 47 checks the timer T1 to determine whether the passage of time is within a preset separation-from-reception-range permissible time in step S5. If the passage of time is within the separation-from-reception-range permissible time, step S24 is executed again.

If the passage of time exceeds the separation-from-reception-range permissible time, the CPU 47 drives the alarm section 56 in step S26, initializes a timer T3 in step S27 and starts the timer T3 in step S28. After this, the CPU 47 checks the timer T3 to determine whether the passage of time is within a preset alarm continuing time in step S29. If the passage of time is within the alarm continuing time, step S29 is executed again. If the passage of time exceeds the alarm continuing time, the CPU 47 interrupts the operation of the alarm section 56 in step S30 and executes step S21 again.

In the information display system, like the first embodiment, the reception and response process is terminated without displaying the article information when the CPU 47 cannot detect its own ID information in step S11 in the reception and response process shown in FIG. 8. Therefore, if the information display unit 2 is not separated from the reception range of the radio signal, steps S21 to S24 shown in FIG. 11 are always repeatedly executed irrespective of the display state of the article information. Thus, the movement of the information display unit 2 is continuously monitored.

In the information display system of the second embodiment, if the information display unit 2 is moved out from the reception range of the radio signal from the radio relay device 3 in a sequence that it is detached from the article display rack 1 and carried away for fun, the alarm section 56 issues an alarm sound after the elapse of the separation-from-reception-range permissible time to notify the surrounding of this. Therefore, it is possible to rapidly cope with the positional abnormality of the information processing unit 2 by detecting the information display unit 2 which issues an alarm sound and returning the same to the attachment place.

Further, even if the information display unit 2 is moved from the attachment place, an alarm sound is not issued if the time of separation from the reception range is within the preset separation-from-reception-range permissible time. As a result, even if a clerk temporarily detaches the information display unit 2 from the article display rack 1 for adjustment or displacement of the information display unit 2, inconvenience that the alarm is sounded will not occur. It is preferable to set 10 seconds or less as the separation-from-reception-range permissible time.

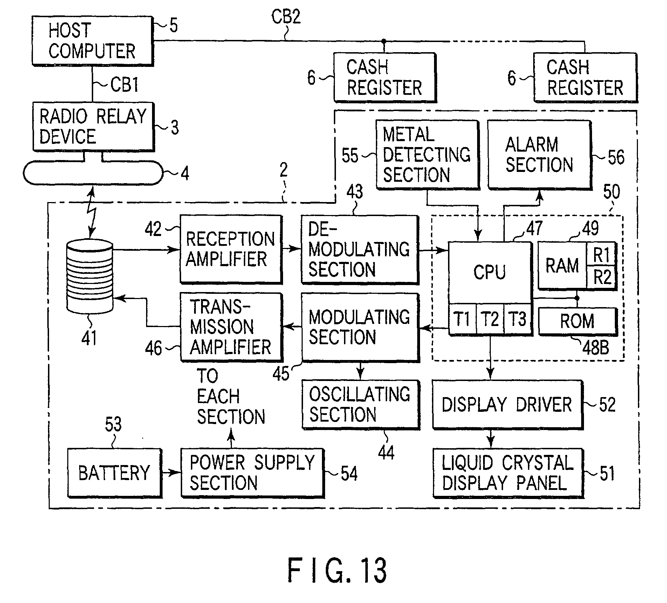

Next, an information display system according to a third embodiment of this invention is explained. FIG. 13 shows the circuit construction of the information display system. The information display system has a construction obtained by adding the second embodiment to the first embodiment. In the information display system, a microcomputer 50 constructs a monitoring section for monitoring the movement of information display units 2 together with a metal detecting section 55 and alarm section 56. Therefore, the metal detecting section 55 shown in FIG. 3 is left behind in the information display unit 2 and the ROM 48 is replaced by a ROM 48B for storing a control program of the CPU 47 which is modified according to utilization of the in-area signal. The information display system is constructed by substantially the same hardware as the information display systems of the first and second embodiments except the above different point. Therefore, in FIG. 13, the explanation for like portions which are denoted by the same reference numerals as in the first and second embodiments is omitted and the different point with respect to the first and second embodiments is mainly explained.

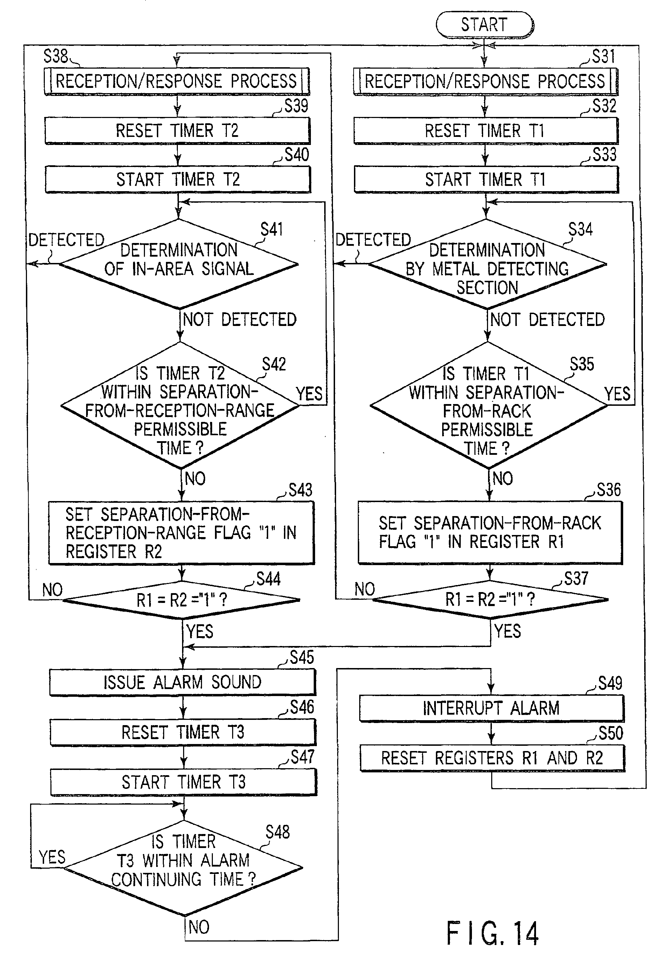

When the information display unit 2 receives the radio signal from the radio relay device 3, ID information and article information are demodulated from the radio signal and processed by the CPU 47. FIG. 14 shows the operation of the CPU 47. The operation begins upon supply of power. The CPU 47 performs the reception and response process which is the same as in FIG. 8 in initial step S31. If the reception and response process is terminated, the CPU 47 initializes a timer T1 of software construction in step S32 and starts the timer T1 in step S33. After this, the timer T1 independently counts the passage of time in parallel to another software process until it is initialized again. After starting the timer T1, in step S34, the CPU 47 checks an output signal of the metal detecting section 55 to determine whether the information display unit 2 is set in the state that it is separated from the attachment place on the article display rack 1. Specifically, the separated state is determined based on an output signal obtained when the metal proximity sensor 55a cannot detect the metal portion of the front rail 1A of the article display rack 1. Since the information display unit 2 is set in the attached state if the metal is detected, step S38 which will be described later is executed.

If it is determined in step S34 that the information display unit 2 is set in the separated state with respect to the initial position, the CPU 47 checks the timer T1 to determine whether the passage of time is within a preset separation-from-rack permissible time in step S35. If the passage of time is within the separation-from-rack permissible time, step S34 is executed again.

If the passage of time exceeds the separation-from-rack permissible time, the CPU 47 sets a separation-from-rack flag "1" in a register R1 of the RAM 49 in step S36 and checks whether both of the contents of the registers R1 and R2 of the RAM 49 are "1". If both of them are "1", step S45 which will be described later is executed.

If it is determined in step S37 that one of the contents of the registers R1 and R2 is "0", the CPU 47 performs the reception and response process which is the same as in FIG. 8 in step S38. If the reception and response process is terminated, the CPU 47 initializes a timer T2 of software construction in step S39 and starts the timer T2 in step S40. After this, the timer T2 independently counts the passage of time in parallel to another software process until it is initialized again. After starting the timer T2, in step S41, the CPU 47 checks the in-area signal S to determine whether the information display unit 2 is set in the state that it is separated from the reception range of the radio signal transmitted from the radio relay device 3. Specifically, the separated state is determined when the in-area signal S for specifying the radio relay device 3 corresponding to the information display unit 2 cannot be received and it is separated from the reception range of the radio signal transmitted from the radio relay device 3. Since the information display unit 2 is set in the attached state if the in-area signal S is detected, step S31 is executed again.

If the in-area signal S cannot be detected in step S41 and it is determined that the information display unit 2 is set in the separated state with respect to the reception range, the CPU 47 checks the timer T2 to determine in step S42 whether the passage of time is within the separation-from-reception-range permissible time. If the passage of time is within the separation-from-reception-range permissible time, step S41 is executed again.

If the passage of time exceeds the separation-from-reception-range permissible time, the CPU 47 sets a separation-from-reception-range flag "1" in a register R2 of the RAM 49 in step S43 and checks in step S44 whether both of the contents of the registers R1 and R2 of the RAM 49 are "1". If one of the contents of the registers R1 and R2 is "0" in step S44, the CPU 47 executes step S31 again.

If both of the contents of the registers R1 and R2 are "1" in step S37 or S44, the CPU 47 drives the alarm section 56 in step S45, initializes a timer T3 in step S46 and starts the timer T3 in step S47. After this, the CPU 47 checks the timer T3 to determine whether the passage of time is within a preset alarm continuing time in step S48. If the passage of time is within the alarm continuing time, step S48 is executed again. If the passage of time exceeds the alarm continuing time, the CPU 47 interrupts the operation of the alarm section 56 in step S49, clears the contents of the registers R1 and R2 to "0" in step S50 and then executes step S31 again.

In the information display system, like the first embodiment, the reception and response process is terminated without displaying the article information when the CPU 47 cannot detect its own ID information in step S11 in the reception and response process shown in FIG. 8. Therefore, if the information display unit 2 is not separated from the attachment place and the reception range of the radio signal, steps S31 to S34 and steps S38 to S41 shown in FIG. 14 are always repeatedly executed irrespective of the display state of the article information. Thus, the movement of the information display unit 2 is continuously monitored.

In the information display system of the third embodiment, if the information display unit 32 is detached from the article display rack 1, the metal detecting section 55 detects this, and if the state is maintained even when the separation-from-rack permissible time has elapsed, the CPU 47 sets "1" in the register R1. Further, if the information display unit 32 is carried away from the reception range of the radio relay device 3, the state is detected based on the reception state of the in-area signal S, and if this is maintained even when the separation-from-reception-range permissible time has elapsed, the CPU 47 sets "1" in the register R2. Thus, if both of the contents of the registers R1 and R2 are "1", the CPU 47 drives the alarm section 56.

Therefore, if the information display unit 2 is detached from the attachment place on the article display rack 1 for fun and moved out from the reception range of the radio signal, the alarm section 56 issues an alarm sound after the elapse of the above-described time to notify the surrounding of this. Therefore, it is possible to rapidly cope with the positional abnormality of the information processing unit 2 by detecting the information display unit 2 which issues an alarm sound and returning the same to the attachment place.

Further, in a case where the radio relay device 3 is brought into a trouble that disables transmission of the radio signal, the information display unit 2 is unable to receive an in-area signal, thus "1" is set in the register R2. However, the register R1 is kept at "0" since the information display unit 2 is retained on the article display rack 1. Accordingly, an alarm sound is not issued in this case. That is, the alarm section 56 will not be erroneously operated by failure of the radio relay device 3 or the like.

Further, for example, if a clerk detaches the display unit 2 from the article display rack 1 to adjust the information display unit 2 and "1" is set in the register R1, the register R2 is kept at "0" unless the display unit 2 is carried away from the reception range of the radio signal from the radio relay device 3. Therefore, also in this case, an alarm sound will not be issued. That is, even if the information display unit 2 is detached from the article display rack 1 for the adjustment operation thereof, the alarm will not be erroneously operated by this.

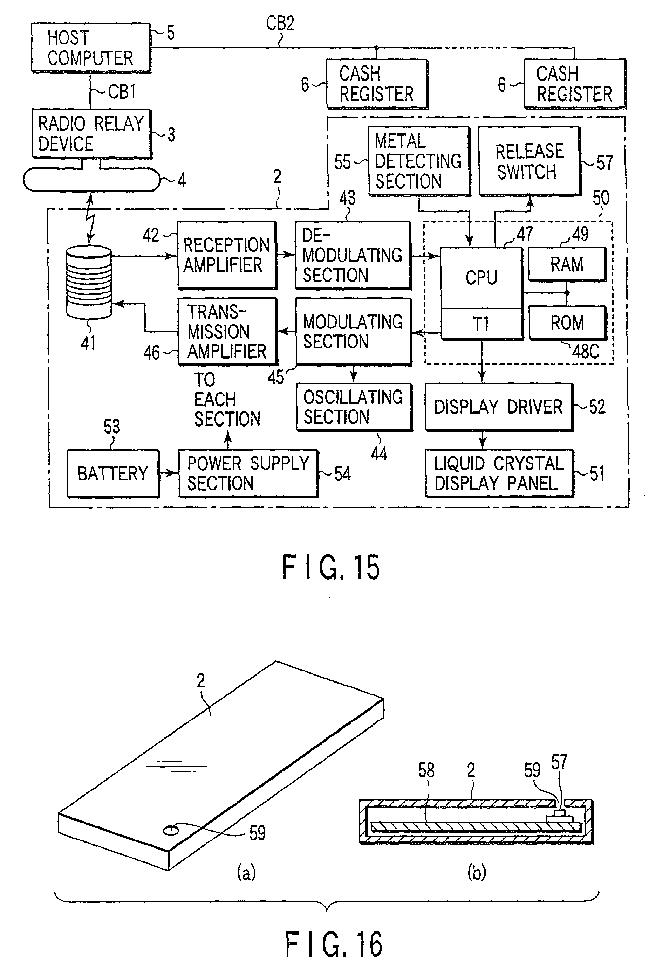

Next, an information display system according to a fourth embodiment of this invention is explained. FIG. 15 shows the circuit construction of the information display system. The information display system is constructed to turn OFF the display of a liquid crystal display panel 51 upon detecting that an information display unit 2 is separated from the attachment place. In the information system, a microcomputer 50 constructs a monitoring section for monitoring the movement of the information display unit 2 together with a metal detecting section 55 and release switch 57. Therefore, the alarm section 56 shown in FIG. 3 is replaced by the release switch 57 in the information display unit 2 and the ROM 48 is replaced by a ROM 48C for storing a control program of the CPU 47 which is modified according to utilization of the in-area signal. The information display system is constructed by substantially the same hardware as the information display system of the first embodiment except the above different point. Therefore, in FIG. 15, the explanation for like portions which are denoted by the same reference numerals as in the first embodiment is omitted and the different point with respect to the first embodiment is mainly explained.

As shown in FIG. 16, the release switch 57 is mounted on an end portion of a print board 58 received in the information display unit 2 and can be operated by a needle-like member to be inserted through a hole 59 formed in the rear surface of the display unit 2. Further, a radio signal transmitted from the radio relay device 3 to the information display units 2 is arranged in the same manner as in the first embodiment.

When the information display unit 2 receives the radio signal from the radio relay device 3, ID information and article information are demodulated from the radio signal and processed by the CPU 47.

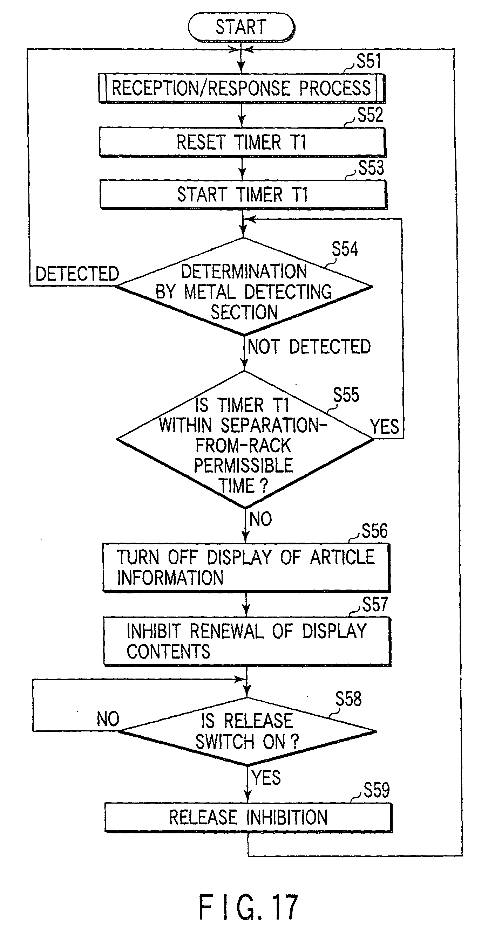

FIG. 17 shows the operation of the CPU 47. The operation begins upon supply of power. The CPU 47 performs the same reception and response process as in FIG. 8 in initial step S51. When the reception and response process is terminated as described above, the CPU 47 initializes a timer T1 of software construction in step S52 and starts the timer T1 in step S53. After this, the timer T1 independently counts the passage of time in parallel to another software process until it is initialized again. After starting the timer T1, in step S54, the CPU 47 checks an output signal of the metal detecting section 55 to determine whether the information display unit 2 is separated from the attachment place on the article display rack 1. Specifically, the separated state is determined based on the output signal obtained when a metal proximity sensor 55a cannot detect metal of a front rail 1A of the article display rack 1. Since the information display unit 2 is set in the attached state if the metal is detected, step S51 is executed again.

If it is determined in step S54 that the information display unit 2 is set in the separated state with respect to the attachment place, the CPU 47 checks the timer T1 to determine whether the passage of time is within a preset separation-from-rack permissible time in step S55. If the passage of time is within the separation-from-rack permissible time, step S54 is executed again.

If the passage of time exceeds the separation-from-rack permissible time, the CPU 47 supplies a control signal for turning OFF the display of the liquid crystal display panel 56 to a display driver 52 until next renewal of the display contents in step S56 and disables the display driver to inhibit renewal of the display contents in step S57. After this, the CPU 47 checks in step S59 whether the release switch 57 is turned ON. If the release switch 57 is not turned ON, step S58 is repeatedly executed.

If it is detected in step S58 that the release switch 57 is turned ON, the display driver 52 is enabled to release the inhibition of renewal of the display contents and step S51 is executed again.

In the information display system, the reception and response process is terminated without displaying the article information when the CPU 47 cannot detect its own ID information in step S11 in the reception and response process shown in FIG. 8. Therefore, if the information display unit 2 is not separated from the attachment place, steps S51 to S54 shown in FIG. 17 are always repeatedly executed irrespective of the display state of the article information. Thus, since the movement of the information display unit 2 is continuously monitored, it becomes possible to prevent delay in recognition with respect to the positional abnormality of the information display unit 2.

In the information display system of the fourth embodiment, if the information display unit 2 is slid or detached from the article display rack 1 for fun, and as a result, it is separated from the attachment place, the display of the liquid crystal display panel 51 is turned OFF after the elapse of the separation-from-rack permissible time. After this, renewal of the price display is also inhibited. Therefore, it is possible to rapidly cope with the above positional abnormality of the information processing unit 2. Further, it is possible to prevent occurrence of a trouble caused by discrepancy between the price of a purchased article which is registered in the electronic cash register 6 and the displayed price on the display rack.

Further, inhibition of renewal of the price display can be easily released by the turn-ON operation of the release switch 57 and the display of the selling price can be updated again by a radio signal from the radio relay device 3 after the release.

This invention is not limited to the above embodiments and can be variously modified in a range without departing from the gist thereof.

In each embodiment, the radio signal transmitted between the radio relay device 3 and the information display unit 2 is a radio wave obtained by modulating a carrier of long wave band, but the radio relay device 3 and information display unit 2 can be modified into a construction which uses a transmission signal such as infrared rays other than the radio wave, for example. For example, the radio relay device 3 and information display unit 2 may be constructed to have a light emitting section and light receiving section for infrared rays which are arranged to face each other to make data communication by modulating the infrared rays. In this case, since it is possible to detect that the information display unit 2 is separated from the attachment place based on the presence or absence of the infrared rays incident on the infrared rays receiving section, the metal detecting section 55 is not required.

Further, the sensor section such as the metal detecting section 55 for detecting that the information display unit 2 is separated from the attachment place and the processing circuit for an output signal thereof may be arranged on the article display rack 1 which lies outside the information display unit 2.

Further, the metal detecting section 55 detects the metal portion of the front rail 1A of the article display rack 1, but it can detect a metal foil tape or the like attached to an article display member other than the article display rack 1. In this case, the separated state is determined based on an output signal of the metal detecting section 55 obtained when the information display unit 2 is separated from the metal foil tape placed at the attachment place. That is, within the reception range of the radio signal transmitted from the radio relay device 3, articles can be exhibited by using an article receiving member such as a wagon, for example.

The information display unit 2 in the first to third embodiments utilizes the alarm section 56 for sounding the alarm, but an informing member other than this can be used. Like the sensor section described above, the informing member such as the alarm section 56 may be arranged on the article display rack 1 which lies outside the information display unit 2. In this case, a single informing member may be commonly provided for a plurality of information display units 2.

Further, in each embodiment, a case wherein the information display unit 2 displays the selling price as the article information is explained, but the selling price can be displayed together with article information such as an article name.

### Industrial Applicability

The information display system can be used to rapidly return the information display unit to the attachment place in response to the positional abnormality thereof.

## Claims

1. An information display system comprising a radio transmission device for transmitting article information of an article as a radio signal, an information display unit detachably attached to a place where the article is exhibited, for receiving article information transmitted from said radio transmission device as the radio signal and displaying the article information, and a monitoring section for monitoring the movement of said information display unit.

2. The information display system according to claim 1, wherein said monitoring section includes a detecting section for detecting that said information display unit is separated from the place for attachment, an informing section for informing the movement of said information display unit, and a control section for driving said informing section when said detecting section detects that said information display unit is separated from the attachment place.

3. The information display system according to claim 2, wherein said control section is constructed to determine that separation from the attachment place is maintained over a preset separation permissible time before driving said informing section.

4. The information display system according to claim 1, wherein said radio transmission device is constructed to periodically incorporate an in-area signal into the radio signal and said monitoring section includes an informing section for informing the movement of said information display unit and a control section for detecting that said information display unit is separated from a reception range of the radio signal transmitted from said radio transmission device based on a receiving state of the in-area signal and then driving said informing section.

5. The information display system according to claim 4, wherein said control section is constructed to determine that separation from the reception range is maintained over a preset separation permissible time before driving said informing section.

6. The information display system according to claim 1, wherein said radio transmission device is constructed to periodically incorporate an in-area signal into the radio signal, and
said monitoring section includes a detecting section for detecting that said information display unit is separated from the place for attachment, an informing section for informing the movement of said information display unit and a control section for driving said informing section in a case where said detecting section detects that said information display unit is separated from the attachment place and it is detected based on a receiving state of the in-area signal that said information display unit is separated from a reception range of the radio signal transmitted from said radio transmission device.

7. The information display system according to claim 6, wherein said control section is constructed to determine that separation from the attachment place is maintained over a first preset separation permissible time and determine that separation from the reception range is maintained over a second preset separation permissible time before driving said informing section.

8. The information display system according to claim 1, wherein said monitoring section includes a detecting section for detecting that said information display unit is separated from the place for attachment and a control section for inhibiting said information display unit from displaying article information in a case where said detecting section detects that said information display unit is separated from the attachment place.

9. The information display system according to claim 8, wherein said control section is constructed to determine that separation from the attachment place is maintained over a preset separation permissible time before inhibiting display of the article information.

10. The information display system according to any one of claims 2, 6 and 8, wherein the place for attachment is formed of a metal material and said detecting section of said monitoring section is constructed by metal detecting means for checking the presence or absence of the metal material to detect separation from the attachment place.

11. An information display unit which is detachably attached to a place where an article is exhibited, comprising a display section for displaying article information of the article, a receiving section for receiving article information transmitted from an external radio transmission device as a radio signal, and a control circuit for controlling said display section to display the article information received by said receiving section, wherein said control circuit includes a monitoring section for monitoring the movement of the information display unit.

12. The information display unit according to claim 11, wherein said monitoring section includes a detecting section for detecting that the information display unit is separated from the place for attachment, an informing section for informing the movement of the information display unit, and a control section for driving said informing section when said detecting section detects that the information display unit is separated from the attachment place.

13. The information display unit according to claim 12, wherein said control section is constructed to determine that separation from the attachment place is maintained over a preset separation permissible time before driving said informing section.

14. The information display unit according to claim 11, wherein the radio transmission device is constructed to periodically incorporate an in-area signal into the radio signal and said monitoring section includes an informing section for informing the movement of the information display unit and a control section for detecting that the information display unit is separated from a reception range of the radio signal transmitted from the radio transmission device based on a receiving state of the in-area signal and then driving said informing section.

15. The information display unit according to claim 14, wherein said control section is constructed to determine that separation from the reception range is maintained over a preset separation permissible time before driving said informing section.

16. The information display unit according to claim 11, wherein the radio transmission device is constructed to periodically incorporate an in-area signal into the radio signal and said monitoring section includes a detecting section for detecting that the information display unit is separated from the place for attachment, an informing section for informing the movement of the information display unit and a control section for driving said informing section in a case where said detecting section detects that the information display unit is separated from the attachment place and it is detected based on a receiving state of the in-area signal that said information display unit is separated from a reception range of the radio signal transmitted from said radio transmission device.

17. The information display unit according to claim 16, wherein said control section is constructed to determine that separation from the attachment place is maintained over a first preset separation permissible time and determine that separation from the reception range is maintained over a second preset separation permissible time before driving said informing section.

18. The information display unit according to claim 11, wherein said monitoring section includes a detecting section for detecting that the information display unit is separated from the attachment place and a control section for inhibiting the information display unit from displaying article information in a case where said detecting section detects that the information display unit is separated from the place for attachment.

19. The information display unit according to claim 18, wherein said control section is constructed to determine that separation from the attachment place is maintained over a preset separation permissible time before inhibiting display of the article information.

20. The information display unit according to any one of claims 12, 16 and 18, wherein the place for attachment is formed of a metal material and said detecting section of said monitoring section is constructed by metal detecting means for checking the presence or absence of the metal material to detect separation from the attachment place.
